# FASCICULE DE BREVET EUROPEEN

(11) **EP 1 952 211 B1**
(45) Date de publication et mention de la délivrance du brevet: **15.04.2009**
(21) Numéro de dépôt: 06831025.9
(22) Date de dépôt: 26.10.2006
(51) Int. Cl.: G05D 1/00, B64C 13/04

(54) **DISPOSITIF DE COMMANDE DE REGIME-MOTEUR, PROCEDE DE COMMANDE DE REGIME-MOTEUR ET AERONEF COMPORTANT UN TEL DISPOSITIF**
TRIEBWERKGESCHWINDIGKEITS-STEUEREINRICHTUNG, VERFAHREN ZUM STEUERN DER TRIEBWERKGESCHWINDIGKEIT UND DAMIT AUSGESTATTETES FLUGZEUG
ENGINE SPEED CONTROL DEVICE, A METHOD FOR CONTROLLING ENGINE SPEED AND AN AIRCRAFT PROVIDED THEREWITH

(30) Priorité: 28.10.2005 FR 0511114
(43) Date de publication de la demande: 06.08.2008
(73) Titulaire: AIRBUS France, 31060 Toulouse Cédex (FR)
(72) Inventeur: PERIE, Jean-Claude, F-31330 Grenade (FR); ROCHE, Valérie, F-31000 Toulouse (FR); DULAUR, Mathieu, F-31300 Toulouse (FR)
(74) Mandataire: Santarelli
(86) Numéro de dépôt international: PCT/FR2006/002411
(87) Numéro de publication internationale: WO 2007/048936

(56) Documents cités:
- EP-A- 0 875 451
- GB-A- 2 114 717
- US-A- 5 613 652

## Description

L'invention concerne un dispositif de commande de régime-moteur, par exemple pour un aéronef, un procédé de commande de régime-moteur et un aéronef comportant un tel dispositif.

Dans les véhicules à moteur, et en particulier dans les aéronefs, on utilise un levier de commande de régime-moteur qui permet au pilote (ou au conducteur) de commander, en fonctionnement manuel, le régime du moteur du véhicule, et, par là, la puissance développée par le moteur et la vitesse du véhicule.

Dans ce but, le levier de commande de régime-moteur délivre au moteur une information assimilable à une consigne de régime-moteur. A réception de cette consigne, les mécanismes internes au moteur réagissent de telle sorte que le régime-moteur effectif converge vers la consigne, ce qui se produit en général avec un temps de réaction de l'ordre de la seconde.

En fonctionnement manuel établi, le régime-moteur effectif suit donc assez précisément la consigne fournie par le levier de commande, de telle sorte que ce dernier donne en général une bonne indication du régime effectif.

Dans d'autres situations, notamment lors de régimes transitoires, il existe par contre un écart notable entre la consigne indiquée par la position du levier de commande de régime-moteur et le régime-moteur effectif. Cet écart entraîne naturellement la variation du régime-moteur effectif vers le régime-moteur de consigne donné par le levier de commande comme expliqué précédemment, ce qui peut conduire à une sensation de secousse désagréable pour les passagers du véhicule lorsque l'écart est important.

C'est notamment le cas dans les véhicules qui utilisent un système de régulation automatique du régime-moteur sans modification correspondante de la position du levier. En effet, en fonctionnement automatique, le régime-moteur est alors entièrement contrôle par ce système, quelle que soit la position du levier de commande de régime-moteur (par exemple la position utilisée avant le passage en mode de fonctionnement automatique) ; il n'existe donc pas, dans ce mode de fonctionnement, de relation entre la consigne générée par le levier de commande et le régime-moteur effectif.

La demande de brevet européen EP 0 875 451 A donne un exemple de dispositif de commande de régime moteur comprenant des moyens pour appliquer un effort sur la commande de régime moteur.

A la sortie du mode de fonctionnement automatique, c'est-à-dire au retour au mode de fonctionnement manuel de la commande de régime-moteur, il existe donc en général un écart entre le régime-moteur effectif, déterminé dans les instants précédents par le système de régulation automatique, et la consigne de régime-moteur générée par le levier de commande.

Comme on l'a indiqué précédemment, cet écart (ou différence) entraîne une variation intempestive du régime-moteur qui peut être perturbante pour le pilote et désagréable pour les passagers, en particulier dans le cas des aéronefs où la variation de poussée correspondante peut être relativement violente.

Afin d'éviter ces variations de régime, les pilotes essaient en général de repositionner le levier de commande de régime-moteur à une position qui corresponde au régime-moteur effectif lors de la sortie du mode de régulation automatique. Pour aider le pilote dans cet effort, il est couramment prévu d'afficher sur un même écran une indication du régime-moteur effectif et une indication de la consigne délivrée par le levier de commande manipulé par le pilote.

Cette solution nécessite toutefois que le pilote observe l'écran concerné, alors qu'il peut vouloir diriger son attention à un autre écran dont il juge l'importance supérieure, ce qui est fréquemment le cas dans les situations où le pilote passe en mode de fonctionnement manuel.

D'autre part, le bon fonctionnement de cette solution implique que le pilote soit attentif à faire converger l'indication de consigne vers l'indication de régime-moteur effectif sur l'écran par l'effet de ses actions sur le levier de commande, ce qui est relativement complexe, en particulier combiné à d'autres actions que doit accomplir le pilote au même moment.

L'invention vise donc notamment à apporter une solution plus pratique à mettre en oeuvre pour le pilote au problème créé par un écart non souhaité entre la consigne de régime-moteur délivrée par le levier de commande et le régime-moteur effectif, par exemple à la désactivation du système de régulation automatique du régime-moteur.

L'invention propose ainsi notamment un dispositif de commande de régime-moteur comprenant un levier de commande de régime-moteur générant une consigne de régime-moteur et des moyens pour délivrer une information indicative du régime-moteur effectif, caractérisé par des moyens d'action aptes à appliquer un effort mécanique sur le levier en fonction de la différence entre la consigne et l'information indicative du régime-moteur effectif.

L'utilisateur du levier perçoit ainsi une sensation tactile en fonction de la proximité de la consigne délivrée par le levier et du régime-moteur effectif.

Dans ce cadre, les moyens d'action délivrent par exemple une information tactile spécifique lorsque la différence est nulle. L'utilisateur est alors informé lorsque la consigne est égale au régime-moteur effectif.

Lorsque le dispositif comprend un système de régulation automatique de régime-moteur, les moyens d'action sont par exemple actifs à la désactivation du système de régulation automatique. La désactivation du système de régulation automatique est en effet un moment où la recherche de coïncidence entre la consigne et le régime-moteur effectif est particulièrement opportune.

Dans ce même contexte, l'information indicative du régime-moteur effectif est par exemple un régime-moteur calculé par le système de régulation automatique. Cette information est facilement disponible.

Les moyens d'action peuvent alors appliquer un effort nul lorsque le système de régulation automatique est actif.

En variante, les moyens d'action peuvent être actifs pendant toute la durée du mode de régulation automatique. Le pilote pourra ainsi rechercher la coïncidence entre la consigne et le régime-moteur effectif avant la désactivation de la régulation automatique, ce qui évitera tout saut de poussée au moment de la désactivation.

Dans ce cas, les moyens d'action peuvent être inactivés à la désactivation du système de régulation automatique.

Selon un premier mode de réalisation envisageable, les moyens d'action comprennent une butée mobile apte à coopérer avec le levier de commande et des moyens pour déplacer la butée mobile en fonction de l'information indicative du régime-moteur effectif.

La butée mobile peut être escamotable.

Selon un second mode de réalisation envisageable, les moyens d'action comprennent un frein électromécanique apte à coopérer avec le levier de commande.

Dans ce cas, on peut prévoir que le frein électromécanique applique un effort résistant maximum au levier de commande lorsque la consigne est égale à l'information indicative du régime-moteur affectif.

Selon un troisième mode de réalisation envisageable les moyens d'action comprennent un moteur apte à agir sur le levier et une électronique de commande du moteur.

On peut alors prévoir que l'électronique de commande commande le moteur de telle sorte que celui-ci génère un couple en fonction de la différence entre la consigne et l'information indicative du régime-moteur effectif.

Par exemple, le moteur génère un couple non nul lorsque ladite différence est non nulle et inférieure à un angle prédéterminé et le moteur génère un couple nul lorsque ladite différence est nulle.

L'invention propose également un aéronef comprenant un dispositif de commande de régime-moteur tel que mentionné ci-dessus.

L'invention propose en outre un procédé de commande de régime-moteur comportant les étapes suivantes:
- détermination d'un régime-moteur calculé au moyen d'un système de régulation automatique de régime-moteur ;
- application par des moyens d'action d'un effort mécanique sur une manette délivrant une consigne de régime-moteur, l'effort mécanique étant fonction de la différence entre là consigne et le régime-moteur calculé.

Selon une solution envisageable, l'étape d'application est réalisée à la désactivation du système de régulation automatique.

En variante, l'étape d'application est réalisée pendant la durée du mode de régulation automatique.

Le procédé peut également inclure une étape de désactivation des moyens d'action après une temporisation prédéterminée.

D'autres caractéristiques et avantages de la présente invention apparaîtront mieux à la lumière de la description qui suit, faite en référence aux dessins annexés dans lesquels :
- la figure 1 représente un système de commande de régime-moteur selon un premier mode de réalisation de l'invention ;
- la figure 2 représente un système de commande de régime-moteur selon un deuxième mode de réalisation de l'invention ;
- la figure 3 représente un système de commande de régime-moteur selon un troisième mode de réalisation de l'invention.

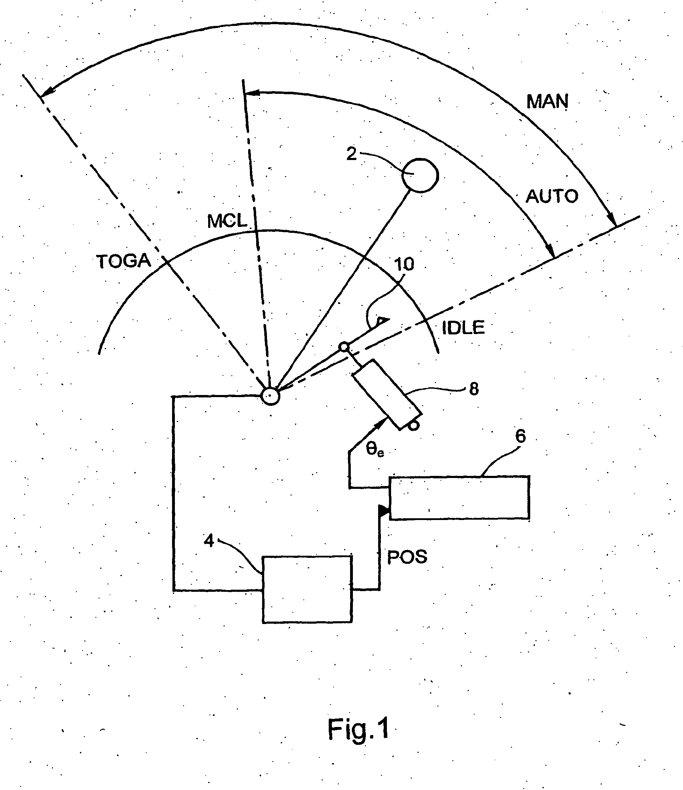

On a représenté à la figure 1 un système de commande de régime-moteur d'un avion qui met en oeuvre un premier mode de réalisation de l'invention.

Ce système de commande de régime-moteur comprend un levier de commande 2 mobile en rotation autour d'un axe perpendiculaire au plan de la figure 1.

Le levier de commande 2 est réalisé sous la forme d'une manette, généralement dénommée par les pilotes "*manette des gaz*".

On a représenté sur un arc de cercle les différentes positions que peut prendre le levier ou manette 2 :
- une position de ralenti, notée "*IDLE*" sur la figure 1 ;
- une position de montée, notée "*MCL*" (acronyme de l'anglais "*maximum climb*" sur la figure 1 ;
- une plage de positions que peut prendre la manette 2 en mode manuel, qui s'étend entre les positions IDLE et TOGA et qui est représenté sous l'appellation "*MAN*" sur la figure 1 ;
- une plage de positions que peut prendre la manette 2 en mode de régulation automatique du régime-moteur, notée "*AUTO*" sur la figure 1 et s'étendant entre les positions IDLE et MCL, la régulation automatique s'effectuant entre le régime représenté par la position de la manette et la position de ralenti ;
- une position de décollage, notée "*TOGA*" sur la figure 1 (acronyme de l'anglais "*take-off go-around*").

On peut prévoir certains points durs, réalisés en général au niveau de la mécanique de rotation de la manette 2, au niveau de chaque position spécifique comme les positions IDLE, MCL et TOGA.

La position de la manette 2 est mesurée par un capteur de position 4 qui transmet une information POS relative à la position angulaire de la manette 2 à un contrôleur de régime-moteur 6.

En mode manuel, la position de la manette 2 représente le régime-moteur désiré par le pilote. L'information de position POS est donc convertie en une consigne de régime-moteur par le contrôleur 6 lors du régime manuel (c'est-à-dire comme on le verra ci-dessous lorsque la manette 2 n'est pas dans la position AUTO).

En mode de fonctionnement manuel, le contrôleur 6 commande les mécanismes du moteur de l'avion de telle sorte que le régime-moteur de celui-ci converge vers la consigne de régime-moteur dérivée de la position de la manette 2.

Lorsque le mode de régulation automatique du régime-moteur est enclenché (en général à l'aide d'un bouton dans le cockpit de l'appareil et à la condition que la manette 2 soit dans la plage de positions AUTO décrite ci-dessus), le contrôleur 6 détermine le régime-moteur en fonction de divers paramètres qui lui sont accessibles, et non directement de la consigne générée par le dispositif en fonction de la position de la manette 2. A cet effet, le contrôleur 6 comprend un calculateur qui détermine le régime-moteur optimal (régime-moteur calculé) en fonction des valeurs mesurées de certains paramètres (par exemple: vitesses de l'avion) et des valeurs souhaitées pour ces mêmes paramètres, données par exemple par le programme de pilotage automatique.

La sortie du mode régulation automatique du régime-moteur a lieu par une action du pilote dédiée à cet effet (par exemple sur un bouton situé dans le cockpit) ou lorsque le pilote déplace la manette en dehors de la plage AUTO de positions autorisées pour la régulation automatique.

A ce moment (et éventuellement, selon une variante envisageable, également au préalable pendant le mode automatique afin d'éviter tout retard de mise en place de la butée), le contrôleur 6 commande un actionneur 8 de tette sorte qu'une butée mobile escamotable 10 soit placée, dans la plage AUTO de débattement de la manette 2, à la position angulaire correspondant au régime-moteur effectif, c'est-à-dire au dernier régime-moteur déterminé par la régulation automatique.

Pour ce faire, le contrôleur 6 détermine la position angulaire θₑ qui correspond au dernier régime-moteur demandé par le système de régulation automatique du régime-moteur. Le contrôleur 6 utilise une loi de conversion inverse à celle qui lui permet de transformer l'information de position POS en consigne de régime-moteur lors du fonctionnement manuel.

L'actionneur 8 positionne alors la butée escamotable 10 à la position θₑ demandée par le contrôleur 6.

Ainsi, lorsque le pilote cherche à faire correspondre la consigne de régime-moteur délivrée par la manette 2 au régime-moteur effectif (c'est-à-dire au régime-moteur lors de la sortie du mode automatique), la manette 2 vient en butée contre la butée escamotable 10 précisément lorsque la position recherchée est atteinte.

Le pilote est ainsi informé immédiatement par une sensation tactile au niveau de la manette 2 que la position de correspondance de la consigne et du régime-moteur effectif est atteinte.

On prévoit toutefois que la butée 10 puisse être déplacée par la manette 2 lorsqu'un effort important (par exemple à partir de 5 daN) est exercé sur cette dernière, afin que la présence de la butée 10 ne remette pas en cause la possibilité pour le pilote de déplacer la manette 2 sur toute la plage de commande manuelle.

Par ailleurs, après une temporisation (par exemple 10 secondes), la butée 10 est escamotée de manière à ne pas perturber le fonctionnement normal de la manette 2, en particulier en régime établi.

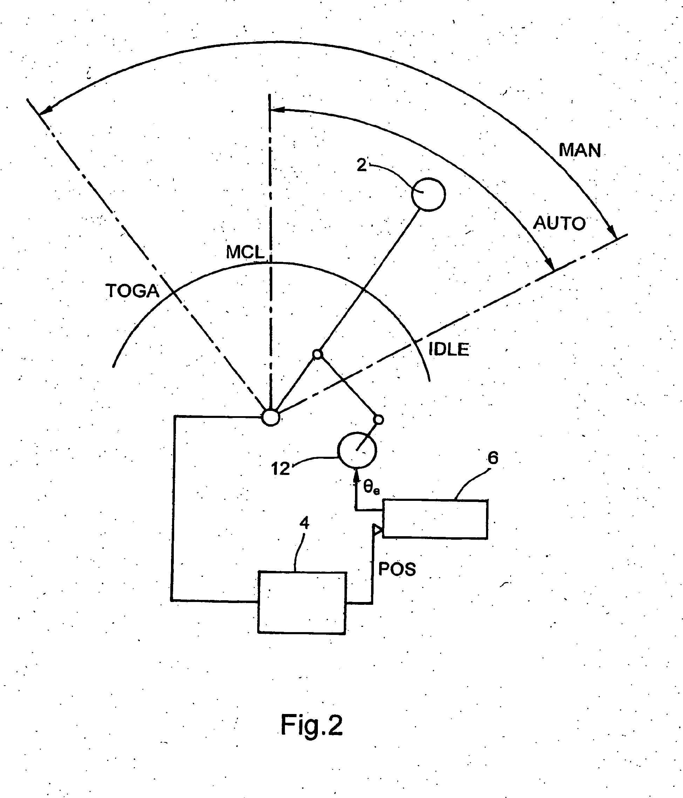

La figure 2 représente un dispositif de commande de régime-moteur réalisé conformément à un second mode de mise en oeuvre de l'invention.

Les éléments communs à ce mode de réalisation et à celui précédemment décrit en référence à la figure 1 portent les mêmes références numériques et ne seront pas décrits à nouveau.

Comme précédemment, le capteur de position 4 envoie au contrôleur 6 une information POS de position de la manette 2. On rappelle que l'information POS permet de déduire en fonctionnement manuel la consigne de régime-moteur de la position de la manette 2.

En mode de régulation automatique du régime-moteur, ce dernier est calculé par le système de régulation automatique, comme déjà expliqué.

A la sortie du mode de régulation automatique du régime moteur, c'est-à-dire lorsque le pilote désactive la régulation automatique ou déplace la manette 2 en dehors de la plage de positions AUTO, le contrôleur 6 commande l'activation d'un frein électromécanique 12 lié à la manette 2.

Précisément, le contrôleur 6 envoie au frein électromécanique 12 une information de position angulaire θₑ indicative du régime-moteur effectif à la sortie du mode de régulation automatique, c'est-à-dire ici correspondant au dernier régime-moteur calculé par le système de régulation automatique de régime-moteur.

Le frein électromécanique 12 est actif à la position angulaire θₑ reçue du contrôleur 6, ou en variante autour de cette position angulaire, de préférence dans ce cas avec un maximum d'action pour la position angulaire θₑ.

Ainsi, lorsque la position de la manette 2 atteint l'angle correspond au régime-moteur effectif (c'est-à-dire que la consigne délivrée par la manette 2 correspond au régime-moteur effectif), le frein électromécanique 12 cirée un couple résistant sur la manette 2 qui donne au pilote une sensation de "point dur" caractéristique d'une position déterminée de la manette, ici la position de concordance entre la consigne et le régime-moteur effectif.

Après une temporisation donnée, c'est-à-dire après un certain laps de temps suivant lé retour en fonctionnement manuel, le frein électromécanique 12 est désactivé de façon à permettre un déplacement normal sur toute la plage de commande manuelle MAN, avec éventuellement des points durs pour les seuls points caractéristiques IDLE, MCL et TOGA comme déjà mentionné à propos de la figure 1.

Dans le mode de réalisation qui vient d'être décrit, le frein électromécanique est actionné pendant une période prédéterminée à la sortie du mode de régulation automatique, ce qui permet de limiter dans le temps ses périodes de fonctionnement.

On peut prévoir en variante (comme déjà évoqué dans le premier mode de réalisation et d'ailleurs applicable aux trois modes de réalisation décrits ici) que les moyens d'action (ici le frein électromécanique) soient actifs pendant toute la durée du mode de régulation automatique, ce qui permet notamment d'aider le pilote dans sa recherche de la position correspondant au régime moteur effectif avant la désactivation de la régulation automatique. Cette position peut ainsi être facilement atteinte au moment de la désactivation, ce qui évite tout saut de poussée.

Selon cette variante, on peut de ce fait prévoir éventuellement que les moyes d'actions soient inactivés à la désactivation du mode de régulation automatique.

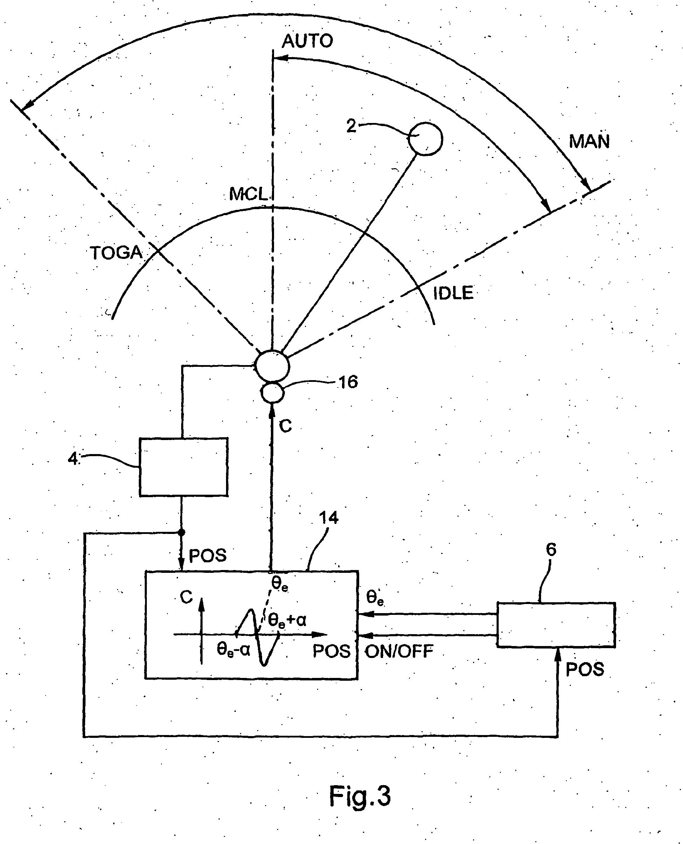

La figure 3 représente un troisième mode de réalisation de l'invention.

Les éléments communs à ce nouveau mode de réalisation et aux modes précédents portent les mêmes références numériques et ne seront pas décrits à nouveau.

Le dispositif de commande de régime-moteur selon le troisième mode de réalisation comprend un moteur 16 apte à agir sur la manette 2 dans les mouvements autour de son axe de notation.

Le moteur est commandé par une électronique de commande 14, en fonction d'informations reçues du contrôleur de régime-moteur 6, et notamment d'une information due position angulaire θₑ et d'une information d'activation ON/OFF, comme décrit en détail dans la suite.

En régime manuel établi, l'information de désactivation OFF est transmise du contrôleur 6 à l'électronique de commande 14, de telle sorte que le moteur 16 est inactif. Les efforts appliqués en rotation sur la manette 2 se limitent donc principalement aux efforts appliqués par le pilote, en dehors d'éventuels points durs mécaniques pour les positions spécifiques du type IDLE, MCL et TOGA, comme déjà indiqué.

La position de la manette 2 donnée par le pilote et mesurée par le capteur de position 4 est transmise au contrôleur 6 sous forme de l'information POS et convertie en consigne de régime-moteur.

Lorsque le mode de régulation automatique du régime-moteur est utilisée, le régime-moteur est déterminé par un calculateur intégré au contrôleur de régime-moteur 6 en fonction de paramètres divers, et non plus en fonction de la consigne dérivée par la position de la manette 2.

Pendant toute la durée du fonctionnement par régulation automatique du régime-moteur, le contrôleur 6 maintient l'information de désactivation OFF destinée à l'électronique de commande 14, de telle sorte que le moteur 16 demeure inactif pendant toute cette durée. Ceci est en accord avec l'utilisation d'une manette fixe pendant la régulation automatique (c'est-à-dire dont la position ne change pas en fonction du régime-moteur régulé, mais pourrait éventuellement être modifiée sous l'action du pilote), puisque, selon cette conception, la manette 2 est généralement immobile pendant toute la durée de la régulation automatique du régime-moteur.

Toutefois, comme on l'a expliqué précédemment, à la sortie du mode de régulation automatique, la consigne qui est alors dérivée de la nouvelle position de la manette 2 (par le fonctionnement manuel rappelé ci-dessus) ne correspond pas en général au régime-moteur effectif à l'instant de désactivation de la régulation automatique. Afin d'éviter la variation de régime moteur entraînée par cet écart, le pilote cherche généralement à faire correspondre la position de la manette 2 (et ainsi la nouvelle consigne générée) avec le régime-moteur effectif.

Afin d'aider le pilote dans cette recherche, le contrôleur 6 active l'électronique de commande 14 par la transmission de l'information ON. Le contrôleur 6 transmet également une information de position angulaire θₑ qui correspond au dernier régime-moteur calculé par le système de régulation automatique, qui est indicatif du régime-moteur effectif.

L'électronique de commande 14 commande alors le moteur 16 en fonction de la position de la manette 2 mesurée par le capteur de position 4 de manière à donner au pilote une sensation tactile lorsque la position de la manette 2 correspond au régime-moteur effectif (indiqué par l'information de position angulaire θₑ).

Pour ce faire, l'électronique de commande 14 agit par exemple selon une fonction du type schématiquement représenté sur la figure 3. Selon cet exemple, le moteur 16 est actif seulement pour des positions angulaires de la manette 2 qui ne diffèrent de la position angulaire θₑ correspondant au régime-moteur effectif que d'un angle inférieur à un angle prédéterminé α.

Cet exemple prévoit en outre que, lorsque la position de la minette 2 est inférieure à l'angle θₑ (c'est-à-dire donc entre θₑ-α et θₑ), le monteur 16 génère sur la manette 2 un couple positif (par exemple correspondant à un effort compris entre 2 N et 8 N) qui tend donc à déplacer la manette vers la position θₑ.

De façon symétrique, lorsque la position de la manette 2 est supérieure à θₑ (c'est-à-dire donc entre les angles θₑ et θₑ+α), l'électronique de commande 14 commande au moteur 16 de générer sur la manette 2 un couple négatif (par exemple du même ordre de grandeur en valeur absolue que le couple positif) qui tend donc à ramener la manette 2 vers la position θₑ.

L'exemple qui vient d'être décrit permet donc de faire tendre la manette 2 vers une position stable à l'angle θₑ par action du moteur 16 lorsque le pilote approche la manette 2 d'un angle α de cette même position θₑ.

A titre illustratif, on peut prendre α entre 1° et 10°, par exemple α=2°.

On remarque que le moteur 16 et l'électronique de commande associée 14 ne sont pas utilisés ici pour entraîner le déplacement de la manette 2 sur toute la plage de commande manuelle, mais pour générer un profil d'effort spécifique qui permet au pilote de trouver plus facilement la position de correspondance entre la nouvelle consigne générée par la position de la manette 2 et le régime-moteur effectif à la sortie du mode de fonctionnement automatique.

Après une temporisation prédéterminée, le contrôleur 6 désactive l'électronique de commande 14 (et de ce fait le moteur 16) en transmettant l'information de désactivation OFF à l'électronique de commande. On retrouve alors le fonctionnement en régime manuel établi précédemment décrit.

L'invention n'est pas limitée aux modes de réalisation qui viennent d'être décrits. D'autres moyens d'actions que ceux présentés ci-dessus peuvent notamment être utilisés II peut par exemple s'agir d'un dispositif qui génère des vibrations dans la manette (ou levier de commande) lorsque la consigne donnée par la manette correspond au régime effectif, c'est-à-dire quand la différence entre la consigne et l'information indicative du régime effectif est nulle.

## Revendications

1. Dispositif de commande de régime-moteur-comprenant:
- un lever de commande (2) de régime-moteur générant une consigne de régime-moteur (POS);
- des moyens pour délivrer une information (θₑ) indicative du régime-moteur effectif,
**caractérisé par**
- des moyens d'action (8, 10 ; 12 ; 14, 16) aptes à appliquer un effort mécanique sur le levier en fonction de la différence entre la consigne (POS) et l'information (θₑ) indicative du régime-moteur effectif.

2. Dispositif selon la revendication 1, dans lequel les moyens d'action délivrent une information tactile spécifique à un utilisateur du levier de commande (2) lorsque la différence est nulle.

3. Dispositif selon la revendication 1 ou 2, comprenant un système de régulation automatique de régime-moteur (6) et dans lequel l'information (θₑ) indicative du régime-moteur effectif est un régime-moteur calculé par le système de régulation automatique (6).

4. Dispositif selon la revendication 3, dans lequel les moyens d'action (8, 10 ; 12 ; 14, 16) sont actifs à la désactivation du système de régulation automatique (6) et dans lequel les moyens d'action (8, 10 ; 12 ; 14; 16) appliquent un effort nul lorsque le système de régulation automatique (6) est actif.

5. Dispositif selon la revendication 3, dans lequel les moyens d'action (8, 10 ; 12 14, 16) sont actifs pendant la durée du mode de régulation automatique et dans lequel les moyens d'action (8, 10 ; 12.; 14, 16) sont inactivés à la désactivation du système de régulation automatique (6).

6. Dispositif selon l'une des revendications 1 à 5, dans lequel les moyens d'action comprennent:
- une butée mobile (10) apte à coopérer avec le levier de commande (2);
- des moyens (8) pour déplacer la butée mobile (10) en fonction de l'information (θₑ) indicative du régime-moteur effectif.

7. Dispositif selon l'une des revendications 1 à 5, dans lequel les moyens d'action comprennent un frein électromécanique (12) apte à coopérer avec le levier de commande (2).

8. Dispositif selon la revendication 7, dans lequel le frein électromécanique (12) applique un effort résistant maximum au levier de commande (2) lorsque la consigne (POS) est égale à l'information (θₑ) indicative du régime-moteur effectif.

9. Dispositif selon l'une des revendications 1 à 5, dans lequel les moyens d'action comprennent un moteur (16) apte à agir sur le levier (2) et une électronique de commande (14) du moteur et dans lequel l'électronique de commande (14) commande le moteur (16) de telle sorte que celui-ci génère un couple en fonction de la différence entre la consigne (POS) et l'information (θₑ) indicative du régime-moteur effectif.

10. Dispositif selon la revendication 9, dans lequel le moteur (16) génère un couple (C) non nul lorsque ladite différence est non nulle et inférieure à un angle prédétermine (α) et dans lequel le moteur génère un couple (C) nul lorsque ladite différence est nulle.

11. Aéronef **caractérisé en ce qu'**il comprend un dispositif de commande de régime-moteur selon l'une des revendications 1 à 10.

12. Procédé de commande de régime-moteur comprenant les étapes suivantes:
- détermination d'un régime-moteur (θₑ) calculé au moyen d'un système de régulation automatique (6) de régime-moteur:
- application par des moyens d'action (8, 10 ; 12 ; 14, 16) d'un effort mécanique sur un levier (2) délivrant une consigne (POS) de régime-moteur, l'effort mécanique étant fonction de la différence entre la consigne (POS) et le régime-moteur calculé (θₑ).

13. Procédé de commande selon la revendication 12, dans lequel l'étape d'application est réalisée à la désactivation du système de régulation automatique (6).

14. Procédé de commande selon la revendication 13, comprenant une étape de désactivation des moyens d'action (8, 10 ; 12 ; 14, 16) après une temporisation prédéterminée.

15. Procédé de commande selon la revendication 12, dans lequel l'étape d'application est réalisée pendant la durée du mode de régulation automatique (6).

## Claims

1. A device for engine speed control comprising:
- an engine speed control lever (2) generating an engine speed setting (POS);
- means for delivering information (θₑ) indicating the actual engine speed,
**characterized by**
- actuating means (8, 10; 12; 14, 16) adapted to apply a mechanical force to the lever according to the difference between the setting (POS) and the information (θₑ) indicating the actual engine speed.

2. A device according to claim 1, in which the actuating means deliver specific tactile information to a user of the control lever (2) when the difference is zero.

3. A device according to claim 1 or 2, comprising a system for automatic engine speed regulation (6) and in which the information (θₑ) indicating the actual engine speed is an engine speed calculated by the automatic regulation system (6).

4. A device according to claim 3, in which the actuating means (8, 10 ; 12 ; 14, 16) are active upon deactivation of the automatic regulation system (6) and in which the actuating means (8, 10; 12; 14, 16) apply zero force when the automatic regulation system (6) is active.

5. A device according to claim 3, in which the actuating means (8, 10 ; 12 ; 14, 16) are active throughout the duration of the automatic regulation mode and in which the actuating means (8, 10; 12; 14, 16) are inactive upon deactivation of the automatic regulation system (6).

6. A device according to one of claims 1 to 5, in which the actuating means comprise:
- a moveable abutment (10) adapted to cooperate with the control lever (2);
- means (8) for moving the moveable abutment (10) according to the information (θₑ) indicating the actual engine speed.

7. A device according to one of claims 1 to 5, in which the actuating means comprise an electro-mechanical brake (12) adapted to cooperate with the control lever (2).

8. A device according to claim 7, in which the electro-mechanical brake (12) applies a maximum resisting force to the control lever (2) when the setting (POS) is equal to the information (θₑ) indicating the actual engine speed.

9. A device according to one of claims 1 to 5, in which the actuating means comprise a motor (16) adapted to act on the lever (2) and control electronics (14) for the motor and in which the control electronics (14) controls the motor (16) such that the latter generates a couple according to the difference between the setting (POS) and the information (θₑ) indicating the actual engine speed.

10. A device according to claim 9, in which the motor (16) generates a non-zero couple (C) when said difference is not zero and less than a predetermined angle (α) and in which the motor generates a zero couple (C) when said difference is zero.

11. An aircraft **characterized in that** it comprises an engine speed control device according to one of claims 1 to 10.

12. A method of engine speed control comprising the following steps:
- determining an engine speed (θₑ) calculated by means of an automatic engine speed regulation system (6);
- applying, by actuating means (8, 10 ; 12 ; 14, 16), a mechanical force on a lever (2) delivering an engine speed setting (POS), the mechanical force depending on the difference between the setting (POS) and the calculated engine speed (θₑ).

13. A control method according to claim 12, in which the applying step is carried out upon deactivation of the automatic regulation system (6).

14. A control method according to claim 13, comprising a step of deactivating the actuating means (8, 10 ; 12; 14, 16) after a predetermined time interval.

15. A control method according to claim 12, in which the applying step is carried out throughout the duration of the automatic regulation mode (6).

## Patentansprüche

1. Vorrichtung zur Steuerung der Motordrehzahl, umfassend:
- einen Hebel (2) zur Steuerung der Motordrehzahl, der einen Motordrehzahl-Sollwert (POS) erzeugt;
- Mittel zum Liefern einer die tatsächliche Motordrehzahl angebenden Information (θₑ),
**gekennzeichnet durch**
- Aktionsmittel (8, 10; 12; 14, 16), die geeignet sind, eine mechanische Kraft an den Hebel in Abhängigkeit von der Differenz zwischen dem Sollwert (POS) und der die tatsächliche Motordrehzahl angebenden Information (θₑ) anzulegen.

2. Vorrichtung nach Anspruch 1, bei der die Aktionsmittel einem Benutzer des Steuerhebels eine spezifische taktile Information liefern, wenn die Differenz null ist.

3. Vorrichtung nach Anspruch 1 oder 2, die ein System zur automatischen Motordrehzahl-Regelung (6) umfasst und bei der die die tatsächliche Motordrehzahl angebende Information (θₑ) eine durch das automatische Regelsystem (6) errechnete Motordrehzahl ist.

4. Vorrichtung nach Anspruch 3, bei der die Aktionsmittel (8, 10; 12; 14, 16) bei der Deaktivierung des automatischen Regelsystems (6) aktiv sind und bei der die Aktionsmittel (8, 10; 12; 14, 16) eine Kraft null anlegen, wenn das automatische Regelsystem (6) aktiv ist.

5. Vorrichtung nach Anspruch 3, bei der die Aktionsmittel (8, 10; 12; 14, 16) während der Dauer des automatischen Regelmodus aktiv sind und bei der die Aktionsmittel (8, 10; 12; 14, 16) bei der Deaktivierung des automatischen Regelsystems inaktiviert werden.

6. Vorrichtung nach einem der Ansprüche 1 bis 5, bei der die Aktionsmittel umfassen:
- einen beweglichen Anschlag (10), der geeignet ist, mit dem Steuerhebel (2) zusammenzuwirken;
- Mittel (8) zum Bewegen des beweglichen Anschlags (10) in Abhängigkeit von der die tatsächliche Motordrehzahl angebenden Information (θₑ).

7. Vorrichtung nach einem der Ansprüche 1 bis 5, bei der die Aktionsmittel eine elektromechanische Bremse (12) umfassen, die geeignet ist, mit dem Steuerhebel (2) zusammenzuwirken.

8. Vorrichtung nach Anspruch 7, bei der die elektromechanische Bremse (12) an den Steuerhebel (2) eine maximale Widerstandskraft anlegt, wenn der Sollwert (POS) gleich der die tatsächliche Motordrehzahl angebenden Information (θₑ) ist.

9. Vorrichtung nach einem der Ansprüche 1 bis 5, bei der die Aktionsmittel einen Motor (16), der geeignet ist, auf den Hebel (2) einzuwirken, und eine Elektronik (14) zur Steuerung des Motors umfassen und bei der die Steuerelektronik (14) den Motor (16) so steuert, dass dieser ein Drehmoment in Abhängigkeit von der Differenz zwischen dem Sollwert (POS) und der die tatsächliche Motordrehzahl angebenden Information (θₑ) erzeugt.

10. Vorrichtung nach Anspruch 9, bei der der Motor (16) ein Drehmoment (C) von nicht null erzeugt, wenn die Differenz nicht null und kleiner als ein vorbestimmter Winkel (α) ist, und bei der der Motor ein Drehmoment (C) null erzeugt, wenn diese Differenz null ist.

11. Flugzeug, **dadurch gekennzeichnet, dass** es eine Vorrichtung zur Steuerung der Motordrehzahl nach einem der Ansprüche 1 bis 10 umfasst.

12. Verfahren zur Steuerung der Motordrehzahl, umfassend die folgenden Schritte:
- Bestimmung einer Motordrehzahl (θₑ), die mit Hilfe eines Systems (6) zur automatischen Regelung der Motordrehzahl errechnet wird;
- Anlegen einer mechanischen Kraft an einen Hebel (2), der einen Motordrehzahl-Sollwert (POS) liefert, durch Aktionsmittel (8, 10; 12; 14, 16), wobei die mechanische Kraft von der Differenz zwischen dem Sollwert (POS) und der errechneten Motordrehzahl (θₑ) abhängig ist.

13. Verfahren zur Steuerung nach Anspruch 12, bei dem der Schritt des Anlegens bei der Deaktivierung des automatischen Regelsystems (6) durchgeführt wird.

14. Verfahren zur Steuerung nach Anspruch 13, umfassend einen Schritt der Deaktivierung der Aktionsmittel (8, 10; 12; 14, 16) nach einer vorbestimmten Verzögerung.

15. Verfahren zur Steuerung nach Anspruch 12, bei dem der Schritt des Anlegens während der Dauer des automatischen Regelmodus (6) durchgeführt wird.
